# EUROPÄISCHE PATENTANMELDUNG

(11) **EP 2 148 092 A1**
(43) Veröffentlichungstag der Anmeldung: **27.01.2010**
(21) Anmeldenummer: 08013233.5
(22) Anmeldetag: 21.07.2008
(51) Int. Cl.: F03G 7/10, H02K 53/00

(54) **Durch das höchste Antriebsmoment der Drehkraft desorientierten Rades kann man die Funktion des Perpetuum mobile erreichen**

(71) Anmelder: Kefalogiannis, Konstantinos, 71414 Heraklion - Kreta (GR)
(72) Erfinder: Kefalogiannis, Konstantinos, 71414 Heraklion - Kreta (GR)

(57) **Zusammenfassung**

Die Funktion des Perpetuum mobile kann man durch das höchste Antriebsmoment der Drehkraft des rotierenden Rades erreichen.

Wenn das Rad sich mit der möglichst höchsten und sichersten Geschwindigkeit drehen wird, werden am Ende der Radachse (Punkt B) zwei (2) Kräfte erzeugt: die Kraft des Elektromotors und die Kraft des Drehmoments. Genau diese Kraft des Drehmoments halte ich als überschüssige Energie und sie ist bestens dafür geeignet um dem Perpetuum mobile die nötige Energie zu geben.

## Beschreibung

Durch das höchste Antriebsmoment der Drehkraft desrotierenden Rades kann man die Funktion des Perpetuum mobile erreichen.

Das Perpetuum mobile wird bestehen aus:
a) einem Eisenrad zusammen mit seiner Achse und einem sehr großen Gewicht am Umfang des Rades
b) einem elektrischen Motor
   einem elektrischen Generator
   (Aus den jeweiligen Versuchen, welche ich für die Funktion des Perpetuum mobile vorgenommen hatte und deren Antrag ich mit der Nummer 02386012.5 gestellt hatte, aus diesen Versuchen entstand die neue Idee für die Funktion des Perpetuum mobile, das uns von Abgasen, Lärm und der Umweltverschmutzung befreien wird).

Das sehr große Gewicht am Umfang des Rades wird als Multiplikator funktionieren und die von der Achse des Rades gewonnene Kraft ist proportional zum Gewicht und der rotierenden Geschwindigkeit. Folglich sollte die Energie nur dann gewonnen werden, wenn sich das Rad mit der möglichst höchsten Geschwindigkeit drehen wird.

### Konstruktionsanleitung

Zuerst werden wir das Rad an seine Basis montieren, entweder in einer senkrechten oder in einer waagerechten Position.

Am einen Ende der Achse Punkt (A) werden wir eine Riemenscheibe montieren, über deren Riemen die Kraft vom Elektromotor auf das Rad übertragen wird.

Die Anzahl der Umdrehungen, sollte die der sicheren Umdrehung des Rades entsprechen, z. B. 750-800 Umdrehungen die Minute.

Genau in dem Moment, in dem das Rad sich mit der möglichst höchsten und sichersten Geschwindigkeit drehen wird, werden am anderen Ende der Radachse Punkt (B) zwei (2) Kräfte erzeugt: die Kraft des Elektromotors und die Kraft des Drehmoments, die durch das rotierende Rad erzeugt werden.

Genau diese Kraft des Drehmoments halte ich als überschüssige Energie und sie ist bestens dafür geeignet um dem Perpetuum mobile die nötige Energie zu geben.

### Betriebsanleitung

Am Anfang versorgen wir den Elektromotor, dessen Kraft den Elektrogenerator selbständig betätigen kann, mit dem Haushaltstrom.

Die Geschwindigkeit des Motors beschleunigt sich langsam bis er die Umdrehungen erreicht, die von der produzierenden Firma bestimmt sind. Zusammen mit dem Motor und den durch den Riemen erzeugten Antrieb, wird sich auch das Eisenrad drehen. Die Anzahl der Umdrehungen wird in Verbindung mit der Riemenscheibe, die wir am einen Ende der Achse Punkt (A) montiert haben, eingestellt.

Wenn das Rad, frei von jedem Gewicht, die festgelegte Anzahl der Umdrehungen erreicht z.B. 750-800 Umdrehungen die Minute, dann erreichen wir am anderen Ende der Achse Punkt (B) die maximale Kraft. Somit haben wir die Kraft des Motors und des Drehmoments, die das rotierende Rad erzeugt.

Genau dann werden wir die elektromagnetische Kupplung, die am Ende der Achse (Punkt B) montiert wurde, aktivieren. Und in Kombination der Riemenscheiben 2 zu 1, soll der Generator eintausendfünfhundert (1500) Umdrehungen erreichen, denn so viele sind notwendig, damit er aktiviert wird und um Strom zu erzeugen. Ich glaube fest daran, dass die erzeugte Strommenge, verglichen mit der Strommenge, die der Motor verbraucht, wesentlich größer ist.

Die Reibungen und der Energieverlust, die dabei entstehen, werden im Gegensatz zu dem höchsten Antriebsmoment der Drehkraft des Rades, fast minimal sein. Ab diesen Moment wird die Stromversorgung des Motors über den Generator geleitet und somit gelangen wir zur Funktion des Perpetuum mobile. Bei Stromüberfluss speichern wir diesen in Akkumulatoren und aus dieser festen Energiequelle, werden wir den Strom je nach Bedarf verwenden können, sogar für das Automobil.

Hiermit ist die Beschreibung zu Ende und anhand der Erfahrungen, die ich gemacht habe, glaube ich fest daran, dass die Funktion des Perpetuum mobile eine Tatsache ist.

Das was noch fehlt ist dies zu bestätigen und in der Praxis umzusetzen.

Ich glaube fest daran, dass Gott Gerechtigkeit zu schaffen weiß und darum danken wir Ihm.

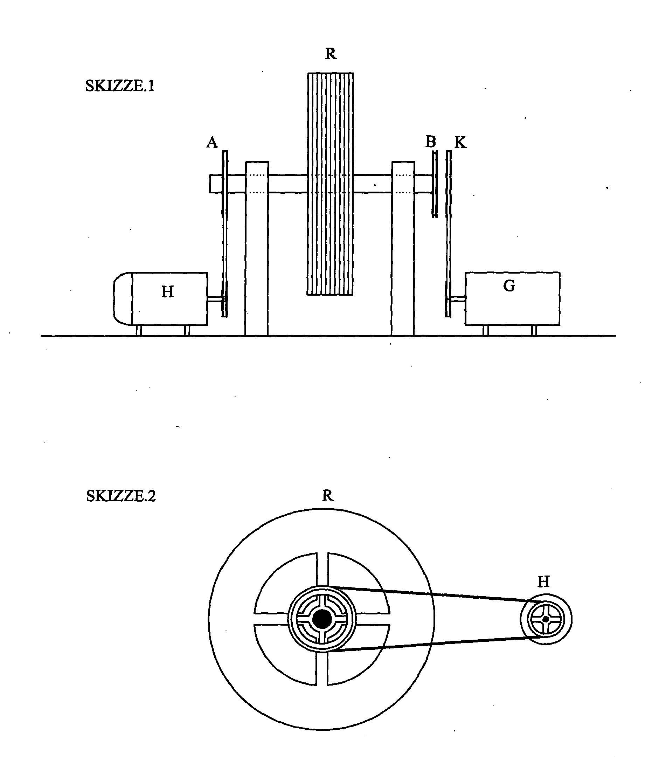

## Patentansprüche

1. Durch das höchste Antriebsmoment der Drehkraft des rotierenden Rades kann man die Funktion des Perpetuum mobile erreichen. Das Perpetuum mobile wird bestehen aus:
a) einem Eisenrad zusammen mit seiner Achse und einem sehr großen Gewicht am Umfang des Rades
b) einem elektrischen Motor
c) einem elektrischen Generator

2. Das sehr große Gewicht am Umfang des Rades wird als Multiplikator funktionieren und die von der Achse des Rades gewonnene Kraft ist proportional zum Gewicht und der rotierenden Geschwindigkeit. Folglich sollte die Energie nur dann gewonnen werden, wenn sich das Rad mit der möglichst höchsten Geschwindigkeit drehen wird.

3. Wenn das Rad sich mit der möglichst höchsten und sichersten Geschwindigkeit drehen wird z. B. 750-800 Umdrehungen die Minute, werden am anderen Ende der Radachse (Punkt B) zwei (2) Kräfte erzeugt: die Kraft des Elektromotors und die Kraft des Drehmoments, die durch das rotierende Rad erzeugt werden.
Genau diese Kraft des Drehmoments halte ich als überschüssige Energie und sie ist bestens dafür geeignet um dem Perpetuum mobile die nötige Energie zu geben.

4. Bei Stromüberfiluss speichern wir diesen in Akkumulatoren und aus dieser festen Energiequelle, werden wir den Strom je nach Bedarf verwenden können, sogar für das Automobil.
